# EUROPÄISCHE PATENTSCHRIFT

(11) **EP 1 593 865 B1**
(45) Veröffentlichungstag und Bekanntmachung des Hinweises auf die Patenterteilung: **28.11.2012**
(21) Anmeldenummer: 05007930.0
(22) Anmeldetag: 12.04.2005
(51) Int. Cl.: F16C 19/16, H02K 5/16

(54) **Wälzlager-Drehverbindung**
Rolling element bearing
Palier à roulement

(30) Priorität: 04.05.2004 DE 102004021966
(43) Veröffentlichungstag der Anmeldung: 09.11.2005
(73) Patentinhaber: Schaeffler Technologies AG & Co. KG, 91074 Herzogenaurach (DE)
(72) Erfinder: Oetjen, Jürgen, 91074 Herzogenaurach (DE)

(56) Entgegenhaltungen:
- EP-A1- 0 402 240
- US-A1- 2002 125 775
- US-A1- 2002 153 785
- US-A1- 2002 153 794

## Beschreibung

### Anwendungsgebiet der Erfindung

Die Erfindung betrifft eine Wälzlager-Drehverbindung, bestehend aus zwei konzentrisch ineinander angeordneten Laufringen, zwischen denen auf zugehörigen Laufbahnen Wälzkörper abrollen, wobei die Wälzlager-Drehverbindung zur aktiven Drehung einer der beiden Laufringe mit einer elektromotorischen Antriebseinheit verbunden ist.

### Hintergrund der Erfindung

Wälzlager-Drehverbindungen sind bereits seit langem bekannt. Laut dem Fachbuch "Die Wälzlagerpraxis", Vereinigte Fachverlage GmbH, Mainz, 1995 werden solche Wälzlager-Drehverbindungen als Schwenklager für die Abstützung von Baggern, Kränen oder im Fahrzeugbau für Gelenkbusse bzw. Straßenbahnen eingesetzt, d. h., in Einsatzgebieten, bei denen bei begrenztem Bauraum hohe Belastungen auftreten und die eine hohe Betriebssicherheit verlangen. Diese Drehverbindungen können Axialkräfte, Radialkräfte und Kippmomente aufnehmen.

In diesem Zusammenhang ist es auch bekannt, dass neben dem Zweck der drehbaren Verbindung zweier Maschinen- oder Anlagenteile zur aktiven Drehung eines der beiden Maschinen- oder Anlagenteile weiterhin ein Antriebsdrehmoment auf eines dieser Maschinen- bzw. Anlagenteile zu übertragen ist, wobei dieses Antriebsmoment meist durch einen elektrischen Antrieb bereitgestellt wird.

Im Prospekt "Antriebseinheiten, Lieferprogramm, 14/2002-IP-N, der Firma PSL Wälzlager GmbH, ist auf Seite 13 eine solche Drehverbindung abgebildet. Diese besteht aus zwei konzentrisch ineinander angeordneten Laufringen, zwischen denen auf zugehörigen Laufbahnen in doppelter Reihe angeordnete Lagerkugeln abwälzen. Der Außenlaufring dieser Drehverbindung ist mit einer umlaufenden Verzahnung versehen, in die ein Schneckenritzel eingreift, das über zwei voneinander beabstandete Lagerstellen in einem Gehäuse gehalten ist. Dieses Schneckenritzel ist mit einer Welle verbunden, die an einem Ende mit einem Elektromotor verbunden ist. Wird über den Elektromotor die Welle bzw. das Schneckenritzel in Rotation versetzt, so bewegt sich der Außenring in Umfangsrichtung.

Bei dieser angetriebenen Drehverbindung ist von Nachteil, dass sowohl der Außenring als auch das Schneckenritzel aus Stahl gefertigt sind. Diese Werkstoffpaarung ist aber für ein Schneckengetriebe ungünstig, weil aufgrund des Schraubgleitens der Zähne von Schneckenritzel und Außenring insbesondere bei großen Belastungen ein hoher Verschleiß gegeben ist. Bei dieser Anordnung ist weiter von Nachteil, dass sie aufgrund des separat angeordneten Elektromotors sehr viel Bauraum beansprucht.

Aus der DE 198 14 629 A1 ist eine Anordnung zur drehbaren Lagerung der Maschinengondel einer Windkraftanlage bekannt, bei der das Drehmoment von der drehbaren Maschinengondel auf den feststehenden Turm mittels elektromotorischer Antriebe übertragen wird. Dies geschieht in der Form, dass die Antriebe mit jeweils einem Zahnradritzel versehen sind, das jeweils in eine am Turm bzw. am feststehenden Lagerring der Drehverbindung angeordnete umlaufende Verzahnung eingreift, wodurch die motorische Drehung der Maschinengondel relativ zum Turm ermöglicht wird. Die vorstehend aufgeführten Nachteile treffen auch für diese gattungsgemäß ausgebildete Drehverbindung zu.

Auch aus der deutschen Gebrauchsmusteranmeldung DE 201 15 350 U1 ist eine Drehverbindung bekannt, bei der die Kraftübertragung auf den Außenring von einem Seilelement mittels Reibschluß und/oder mittels Kraftschluß erfolgt. Auch für diese aktive Drehverbindung gilt, dass sie aufwendig ist und viel Bauraum beansprucht.

Schließlich ist es auch allgemein bekannt, dass in der Medizintechnik aktiv angetriebene Wälzlager-Drehverbindungen eingesetzt werden. Der Antrieb erfolgt dabei in aufwendiger Weise über eine Riemenscheibe, die mit einem Elektromotor verbunden ist.

Daneben sind aus US 2002/0153794, welche gleichzeitig den nächsten Stand der Technik bildet, Wälzlager-Drehverbindungen bekannt, die aus zwei konzentrisch ineinander angeordneten Laufringen bestehen, zwischen denen auf zugehörigen Laufbahnen Wälzkörper abrollen, wobei diese Wälzlager-Drehverbindung zur aktiven Drehung einer der beiden Laufringe mit einer elektromotorischen Antriebseinheit verbunden ist. Diese elektromotorisch Antriebseinheit ist als Direktantrieb in der Form eines Drehmomentenmotors in Segmentbauweise ausgebildet, wobei einer der Laufringe mit wenigstens einem aus Kernen und elektrischen Wicklungen bestehenden Statorsegment und der andere, von Statorsegmenten freie Laufring mit Permanentmagneten verbunden ist. Der innere der beiden Laufringe ist einstückig ausgebildet und weist eine umlaufenden Nut zur Aufnahme der Permanentmagnete auf. Die beiden Lagerringhälften, aus denen der äußere Lagerring gebildet ist, belassen wenigstens einen Durchbruch zur Aufnahme des Statorsegments.

### Zusammenfassung der Erfindung

Der Erfindung liegt daher die Aufgabe zugrunde, eine angetriebene Drehverbindung zu schaffen, die kostengünstig und platzsparend ist.

Erfindungsgemäß wird diese Aufgabe durch eine Wälzlager-Drehverbindung gemäβ dem einzigen Anspruch gelöst.

Der entscheidende Vorteil der Erfindung liegt darin, dass der Drehmomentmotor integraler Bestandteil der Wälzlagerdrehverbindung ist und daher keinen zusätzlichen Bauraum beansprucht. Dieser Direktantrieb sorgt dafür, dass die bereitgestellten Antriebskräfte ohne Zwischenschaltung von Getriebeelementen, wie beispielsweise die aufgeführten Zahnritzel oder die aufgeführten Seilelemente, auf die Wälzlager-Drehverbindung übertragen werden. Es ist weiter von Vorteil, dass mit Hilfe des Drehmomentmotors in Segmentbauweise unterschiedliche Motoren durch Zusammenstellen einzelner Module bereitgestellt werden können, wobei deren Leistung abhängig von der Anzahl der verwendeten Statorsegmente ist. Werden nur geringe Drehzahlen und kleine Drehmomente benötigt, so können zwischen den einzelnen Statorsegmenten breite Lücken gelassen werden. Der Drehmomentmotor ist auch dann noch betriebsfähig, wenn im Extremfall nur ein Statorsegment angeordnet ist. Bei hohem Leistungsbedarf zur aktiven Drehung der Wälzlager-Drehverbindung sind dann entsprechend viele Statorsegmente in Umfangsrichtung hintereinander anzuordnen. Es ist auch von Vorteil, dass gegenüber einem gekapselten geschlossenen Ringmotor die Motorwärme schneller abführbar ist

Die Erfindung wird an nachstehenden Ausführungsbeispielen näher erläutert.

### Kurze Beschreibung der Zeichnungen

Es zeigen:
- Figur 1 und 2: je einen Halbschnitt durch eine Drehverbindung ;
- Figur 3: eine Seitenansicht auf die Drehverbindung gemäß Figur 2;
- Figur 4: einen Halbschnitt durch eine erfindungsgemäße Drehverbindung.

### Ausführliche Beschreibung der Zeichnungen

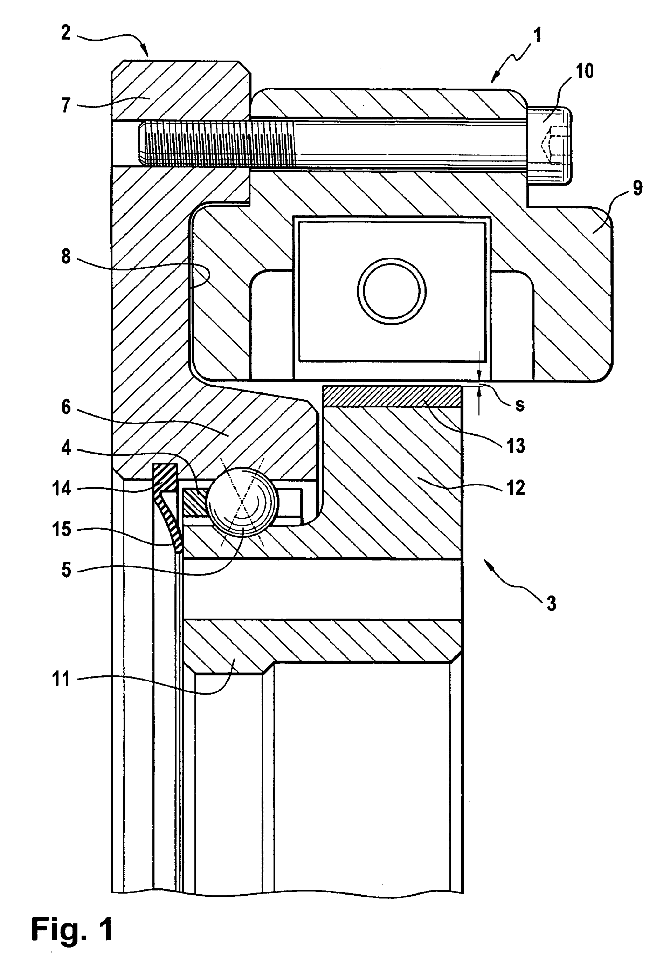

Die in Figur 1 gezeigte Wälzlager-Drehverbindung 1 besteht aus dem äußeren Laufring 2 und dem inneren Laufring 3, zwischen denen auf zugehörigen, nicht bezeichneten Laufbahnen im Käfig 4 geführte Lagerkugeln 5 abwälzen, wobei das Kugellager als ein Vierpunktkugellager ausgebildet ist. Der äußere Laufring 2 ist L-förmig ausgebildet und weist den die Laufbahn tragenden axial verlaufenden Teil 6 und die radial nach außen verlaufende Verlängerung 7 auf. Letztgenannte ist mit mehreren in Umfangsrichtung von einander beabstandeten Ausnehmungen 8 versehen, in denen Statorsegmente 9 angeordnet sind, die mit Hilfe von Befestigungsschrauben 10 am äußeren Laufring 2 fixiert sind. Der innere Laufring 3 weist den axial verlaufenden, die Laufbahn tragenden Teil 11 und die radial verlaufende Verlängerung 12 auf, die ebenfalls nach außen gerichtet ist. An deren Mantelfläche sind Permanentmagnete 13 angeordnet. Innerer Laufring 3 und äußerer Laufring 2 sind so zueinander ausgerichtet, dass zwischen dem Statorsegment 9 und dem Permanentmagnet 13 ein Luftspalt s gebildet ist. Wie die Figur 1 weiter zeigt, ist das Vierpunktkugellager vor eindringendem Schmutz durch die Dichtung 14 geschützt, die im äußerem Laufring 2 angeordnet ist und mit ihrer Dichtlippe 15 gleitend am drehbaren inneren Laufring 3 anliegt. Figur 1 läßt den unkomplizierten und bauraumsparenden Aufbau der erfindungsgemäß angetriebenen Wälzlager-Drehverbindung 1 gut erkennen. Die Figur verdeutlicht weiter, dass die Statorsegmente 9 gut zugänglich und durch einfaches Lösen der Befestigungsschraube 10 ausgetauscht werden können.

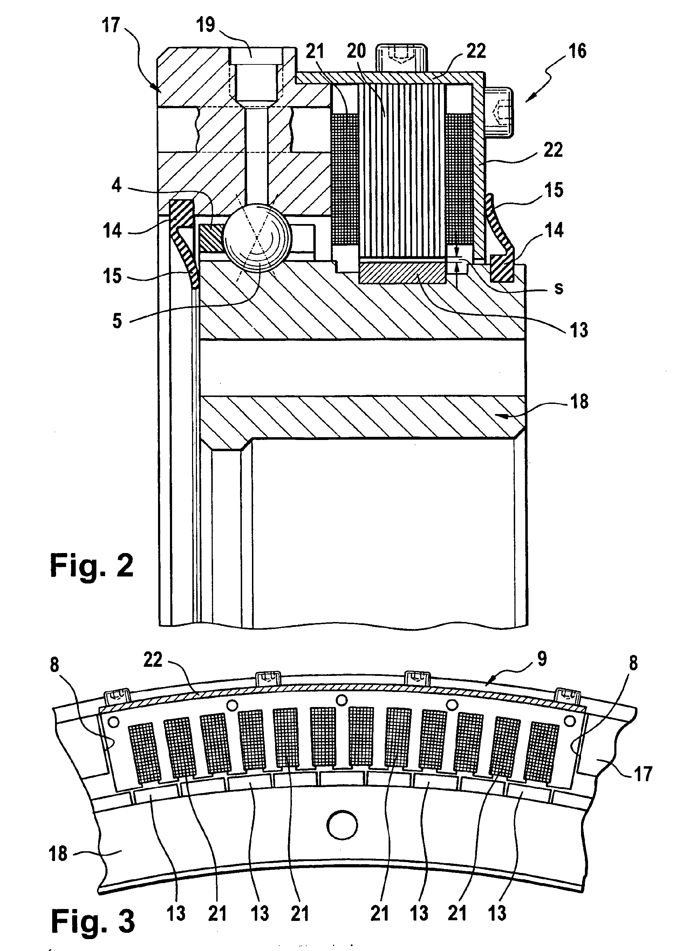

Die in den Figuren 2 und 3 gezeigte Wälzlager-Drehverbindung 16 setzt sich aus dem äußeren Laufring 17 und dem inneren Laufring 18 zusammen, zwischen denen im Käfig 4 geführte Lagerkugeln 5 abwälzen. Der äußere Laufring 17 ist mit einem Schmiernippel 19 versehen, mit dessen Hilfe die Lagerkugeln 5 von außen mit Schmiermittel versorgt werden können. Wie aus den genannten Figuren weiter erkennbar, ist der äußere Laufring 17 mit wenigstens einer Ausnehmung 8 versehen, in der ein Statorsegment 9 angeordnet ist, das sich aus dem Eisenkern 20 und der elektrischen Wicklung 21 zusammensetzt. Das bzw. die Statorsegmente 9 sind durch eine Verkleidung 22 geschützt, die sich aus einem nicht bezeichneten axial verlaufenden und einem nicht bezeichneten radial verlaufenden Teil zusammensetzt. Die Wälzlager-Drehverbindung 16 ist beidseitig durch die Dichtungen 14 geschützt, die einerseits im äußeren Laufring 17 und anderseits im inneren Laufring 18 angeordnet sind, so dass deren Dichtlippen 15 linksseitig am inneren Laufring 18 und rechtsseitig an der Verkleidung 22 anliegen.

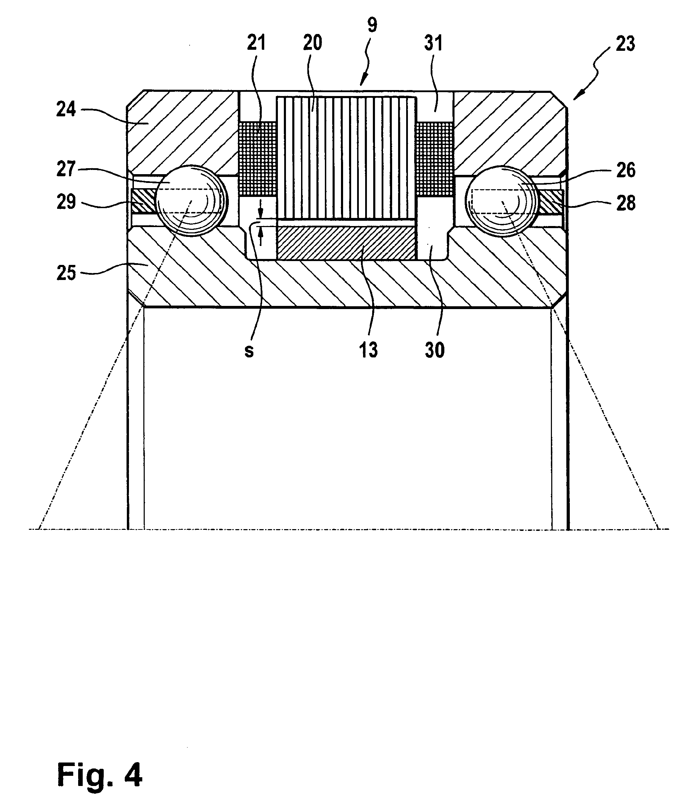

Die in Figur 4 gezeigte erfindungsgemäße Wälzlager-Drehverbindung 23 besteht aus dem äußeren Laufring 24 und dem inneren Laufring 25, zwischen denen auf zugehörigen, nicht näher bezeichneten Laufbahnen in Käfigen 28, 29 geführte Lagerkugeln 26, 27 abwälzen. Wie aus der Figur erkennbar, sind die Lagerkugeln 26, 27 zu einander in O-Anordnung angestellt, d. h., ihre Drucklinien sind schräg nach außen gerichtet. Der äußere Laufring 24 ist mit wenigstens einem Durchbruch 31 versehen, in dem ein aus Eisenkern 20 und elektrischer Wicklung 21 zusammengesetztes Statorsegment 9 eingesetzt ist. Der innere Laufring 25 ist auf seiner äußeren Mantelfläche mit einer umlaufenden Nut 30 versehen, in der die Permanentmagnete 13 angeordnet sind.

Die Erfindung ist nicht auf die beschriebenen Ausführungsbeispiele beschränk, sondern sie wird durch den Anspruch definiert.

### Bezugszahlenliste

- 1: Wälzlager-Drehverbindung
- 2: äußerer Laufring
- 3: innerer Laufring
- 4: Käfig
- 5: Lagerkugel
- 6: axial verlaufender Teil
- 7: Verlängerung
- 8: Ausnehmung
- 9: Statorsegment
- 10: Befestigungsschraube
- 11: axial verlaufender Teil
- 12: Verlängerung
- 13: Permanentmagnet
- 14: Dichtung
- 15: Dichtlippe
- 16: Wälzlager-Drehverbindung
- 17: äußerer Laufring
- 18: innerer Laufring
- 19: Schmiernippel
- 20: Eisenkern
- 21: elektrische Wicklung
- 22: Verkleidung
- 23: Wälzlager-Drehverbindung
- 24: äußerer Laufring
- 25: innerer Laufring
- 26: Lagerkugel
- 27: Lagerkugel
- 28: Käfig
- 29: Käfig
- 30: Nut
- 31: Durchbruch

- s: Luftspalt

## Patentansprüche

1. Wälzlager-Drehverbindung (23), bestehend aus zwei konzentrisch ineinander angeordneten Laufringen (24,25), zwischen denen auf zugehörigen Laufbahnen Wälzkörper (26,27) abrollen, wobei die Wälzlager-Drehverbindung (23) zur aktiven Drehung einer der beiden Laufringe (25) mit einer elektromotorischen Antriebseinheit verbunden ist, wobei die e-lektromotorsiche Antriebseinheit als ein Direktantrieb in der Form eines Drehmomentmotors in Segmentbauweise ausgebildet ist und einer der Laufringe (24) mit wenigstens einem, aus Eisenkernen (20) und einer elektrischen Wicklung (21) bestehenden Statorsegment (9) und der andere, von Statorsegmenten (9) freie Laufring (25) mit Permamentmagneten (13) verbunden ist, und wobei die Wälzlager-Drehverbindung (23) als ein doppelreihiges Schrägkugellager mit einstückigen Laufringen (24,25) ausgebildet ist, wobei der innere Laufring (25) mit einer umlaufenden Nut (30) zur Aufnahme der Permanentmagenete (13) und der äußere Lagerring (24) mit wenigstens einem Durchbruch (31) zur Aufnahme des Statorsegmentes (9) versehen ist.

## Claims

1. Anti-friction bearing rotary connection (23), consisting of two running rings (24, 25) which are arranged concentrically inside one another and between which rolling bodies (26, 27) roll on associated raceways, the anti-friction bearing rotary connection (23) being connected to an electric-motor drive unit for the active rotation of one of the two running rings (25), the electric-motor drive unit being configured as a direct drive in the form of a torque motor of segmental construction, and one of the running rings (24) is connected to at least one stator segment (9) which consists of iron cores (20) and an electric winding (21) and the other running ring (25) which is free from stator segments (9) is connected to permanent magnets (13), and the anti-friction bearing rotary connection (23) being configured as a double-row angular-contact ball bearing with single-piece running rings (24, 25), the inner running ring (25) being provided with a circumferential groove (30) for receiving the permanent magnets (13), and the outer bearing ring (24) being provided with at least one aperture (31) for receiving the stator segment (9).

## Revendications

1. Joint tournant à palier à roulement (23), constitué de deux bagues de roulement disposées concentriquement l'une à l'intérieur de l'autre (24, 25), entre lesquelles des corps de roulement (26, 27) roulent sur des chemins de roulement associés, le joint tournant à palier à roulement (23) étant connecté à une unité d'entraînement à moteur électrique pour effectuer la rotation active de l'une des deux bagues de roulement (25), l'unité d'entraînement à moteur électrique étant réalisée sous forme d'entraînement direct sous forme de moteur-couple de construction segmentée et l'une des bagues de roulement (24) étant connectée à au moins un segment statorique (9) constitué de noyaux de fer (20) et d'un enroulement électrique (21) et l'autre bague de roulement (25) exempte de segments statoriques (9), étant connectée à des aimants permanents (13), et le joint tournant à palier à roulement (23) étant réalisé sous forme de roulement à billes à contact oblique avec des bagues de roulement d'une seule pièce (24, 25), la bague de roulement interne (25) étant pourvue d'une rainure périphérique (30) pour recevoir les aimants permanents (13) et la bague de palier extérieure (24) étant pourvue d'au moins une interruption (31) pour recevoir le segment statorique (9).
